Europäisches Patentamt

European Patent Office

Office européen des brevets

(11) Veröffentlichungsnummer: **0 124 134**
**B1**

(12) # EUROPÄISCHE PATENTSCHRIFT

(45) Veröffentlichungstag der Patentschrift:
**26.08.87**

(51) Int. Cl.⁴: **B 23 K 35/30, C 22 C 19/05**

(21) Anmeldenummer: **84104932.3**

(22) Anmeldetag: **02.05.84**

(54) **Hartlegierung auf Nickelbasis.**

(30) Priorität: **02.05.83 DE 3315920**
**19.09.83 DE 3333808**

(43) Veröffentlichungstag der Anmeldung:
**07.11.84 Patentblatt 84/45**

(45) Bekanntmachung des Hinweises auf die Patenterteilung:
**26.08.87 Patentblatt 87/35**

(84) Benannte Vertragsstaaten:
**AT BE CH DE FR GB LI SE**

(56) Entgegenhaltungen:
**DE - A - 2 011 498**
**DE - A - 3 018 007**
**FR - A - 2 307 214**
**US - A - 3 304 604**
**US - A - 4 089 466**
**US - A - 4 161 207**
**US - A - 4 192 672**
**US - A - 4 228 223**

(73) Patentinhaber: **HERMANN C. STARCK BERLIN,**
**Eschenallee 26, D-1000 Berlin 19 (DE)**

(72) Erfinder: **Lutz, Reinhold, Dipl.-Ing., In den Burgreben 2,**
**D-7888 Rheinfelden/Herten (DE)**
Erfinder: **Wendt, Helgo, verstorben (DE)**
Erfinder: **Meinhardt, Helmut, Dr. Dipl.-Chem.,**
**Laubenstrasse 21, D-7887 Laufenburg/Baden (DE)**
Erfinder: **Eschnauer, Heinz, Dr. Dipl.-Chem., Gelnhäuser**
**Strasse 15, D-6463 Freigericht 1 (DE)**
Erfinder: **Lugscheider, E. Prof. Dr. techn.,**
**Bergstrasse 38, NL-6291 AZ Vaals (NL)**

(74) Vertreter: **Klingseisen, Franz, Dipl.-Ing. et al, Dr. F.**
**Zumstein sen. Dr. E. Assmann Dr. R. Koenigsberger Dr.**
**F. Zumstein jun. Dipl.-Ing. F. Klingseisen**
**Bräuhausstrasse 4, D-8000 München 2 (DE)**

## Beschreibung

Die Erfindung betrifft eine Hartlegierung nach dem Oberbegriff des Anspruchs 1 bzw. des Anspruchs 3.

Aus US-A 4 192 672 ist eine Ni-Cr-B-Si-Legierung bekannt, die unter anderem Chromcarbid-Ausscheidungen enthält, wobei der Gehalt an Cr bis 16 Gew.% und an C max. 0,6 Gew.% beträgt. Die Rockwell-Härte einer solchen Legierung liegt bei 33 bis 40.

Ferner ist aus der US-A 4 161 207 ein Werkstoff zur Herstellung von Auftragslegierungen hoher Härte bekannt, wobei 20–70% Carbide von z.B. Cr, Nb, V, Ta und anderen in einem Matrixwerkstoff vorhanden sein können, der 1,5–5% Si, 1,5–5% B, bis zu 20% Cr, bis zu 7% Mo und als Rest im wesentlichen Ni enthält.

Die grosse Bedeutung der Nickel-Chrom-Bor-Silizium-Hartlegierungen wird durch eine Vielzahl von Veröffentlichungen dokumentiert, aus denen eine Fülle von Anwendungsmöglichkeiten zu ersehen ist. Eine besondere Rolle spielen dabei die Auftrags-Verschleissschutzschichten, die man durch thermisches Spritzen oder Auftragsschweissen auf bestimmte Grundwerkstoffe erhält.

Eine umfassende Übersicht über die chemischen Zusammensetzungen von Hartlegierungen auf Nickelbasis ist angegeben in «Stahl-Eisen-Bücher», Band 20, «Hartlegierungen zum Verschleissschutz», Düsseldorf 1975, Seiten 78 und 79.

In dieser Schrift wird an anderen Stellen über eine Vielzahl von Anwendungsmöglichkeiten berichtet.

Weiterhin wird in der DE-OS 3 018 007 ein pulverförmiger Zusatzverbundwerkstoff beschrieben, der ausser einer Nickel-Chrom-Bor-Silizium-Legierung eine solche mit dem Zusatz von Wolfram, Kohlenstoff und Eisen enthält. Der Gehalt an Kohlenstoff wird bei den bekannten Hartlegierungen möglichst gering gehalten. Er beträgt max. 1 Gew.%.

Von den bekannten Nickel-Chrom-Bor-Silizium-Legierungen sind besonders jene von Interesse, die in der oben bereits genannten Übersicht mit den Nummern 43, 55, 58 und 85 bezeichnet sind. Zur Kennzeichnung und Beschreibung dieser vier genannten Legierungstypen wird auf die nachfolgende Tabelle 1 verwiesen, aus der der Zusammenhang zwischen der Legierungszusammensetzung und den charakteristischen Eigenschaften hervorgeht. Dieser Zusammenhang zwischen Eigenschaften und Zusammensetzungen der Legierungen wird im folgenden beschrieben:

Kennzeichnend für die genannten Legierungen ist die Zunahme der Härte (Rockwell-Härte HRC und Vickers-Härte HV50), die an Schutzschichten gemessen wurde, welche aus den genannten Legierungen bestehen. Es wird deutlich, dass mit wachsenden Gehalten an Chrom, Bor, Silizium und Kohlenstoff ein Härtezuwachs erreicht werden kann. Mit zunehmender Härte wird aber auch die Sprödigkeit der Legierung erhöht, was sich unter anderem dadurch zeigt, dass bei der Durchführung der Härtemessung nach Vickers die Ecken der Eindruckspyramiden bei mikroskopischer Betrachtung deutliche Risse aufweisen, deren gesamte Länge als «Risslängensumme» RLS (über alle vier Ecken) in den Tabellen 1 und 2 angegeben ist. Die Sprödigkeit der höher legierten Nickel-Basis-Legierung hat beim Einsatz der Legierung als Verschleissschutzschicht – insbesondere dann, wenn zusätzliche Hartstoffpartikel eingebettet werden – die unerwünschte Begleiteigenschaft, dass derartige Einbettungen bei mechanischer Beanspruchung bevorzugt ausbrechen und dadurch zu einer unerwünschten Verkürzung der Standzeit von derartig beschichteten Werkstoffen führt. Die Legierung mit dem niedrigsten Gehalt an Metalloiden Bor-Silizium-Kohlenstoff weist zwar keine Risse auf, hat jedoch nur eine unzureichende Härte.

Bei der Verwendung von Hartlegierungen der genannten Art als Auftragswerkstoffe für Verschleissschutzschichten, z.B. durch Auftragen mittels thermischem Spritzen oder Auftragsschweissen, ist eine grosse Zahl von Stahlsorten als Grundwerkstoff nicht oder nur bedingt geeignet, weil beim thermischen Auftragen oder einer späteren thermischen Beanspruchung aufgrund unterschiedlicher thermischer Ausdehnungskoeffizienten die Auftragsschichten zerstört werden. So ist eine ganze Palette von hochlegierten Stählen, z.B. Ventilstähle, Armaturenstähle, Federstähle u.a., einer Beschichtung mit den bekannten spröden Hartlegierungen nicht zugänglich, weil die genannten Nachteile auftreten.

Bei der Verwendung derartiger Hartlegierungen als pulverförmiges Auftragsmaterial für Verschleissschutzschichten in Kombination mit pulverförmigen Hartstoffen diverser anderer Natur ist es wichtig, dass die als Matrix für die Hartstoffpartikel dienende Hartlegierung ausreichend zäh ist, um einer Beanspruchung der Oberflächenverschleissschutzschicht durch Schlag, Stoss oder Vibration zu widerstehen und zugleich bei reibender Beanspruchung die eingebetteten Hartstoffpartikel zu binden.

Es ist daher Aufgabe der vorliegenden Erfindung, die Eigenschaften der Nickel-Basis-Legierungen in der Weise zu verbessern, dass sich die nach Tabelle 1 wechselseitig widersprechenden Eigenschaften, nämlich hohe Zähigkeit in Verbindung mit hoher Härte, in wünschenswerter Weise kombinieren lassen.

Diese Aufgabe wird erfindungsgemäss durch die im Kennzeichen der Ansprüche 1 und 3 angegebene Zusammensetzung gelöst.

So erreicht man bei einer Legierung, wie sie als «Colmonoy 4» (Legierungsbezeichnung der Firma Wall Colmonoy) in der Tabelle 1 als Beispiel angegeben ist, durch Zusatz bestimmter Mengen an Chromcarbid Härtewerte von HRC 60 bzw. 880 HV 50, wobei zugleich jedoch eine hohe Zähigkeit der Legierung erreicht wird, die – ausgedrückt durch die Risslängensumme – nur Werte von 50 µm ergibt. Im Vergleich zu der etwa gleichartig harten Legierung «Colmonoy 8» in Tabelle 1 ist diese Zähigkeit bemerkenswert hoch. Der Cr₃C₂-Zusatz zur Ni-Cr–B-Si-Legierung «Colmonoy 4» in Mengen von 15 bis 23 Gew.% $Cr_3C_2$, bezogen auf die Basislegierung, bewirkt eine Erhöhung der Härte des Werkstoffs unter Aufrechterhaltung der Zähigkeit der Basislegierung.

Man erreicht eine solche Legierung entweder durch Zulegieren von entsprechenden Mengen Chromcarbid, vorzugsweise $Cr_3C_2$, zu bekannten Hartlegierungen, wie in Tabelle 1 angegeben, oder aber auch durch die synthetische Zusammensetzung aus den Einzelkomponenten, nämlich Chrom und elementarem Kohlenstoff in entsprechendem Verhältnis.

Ferner wurde gefunden, dass auch die Carbide der Metalle der 5. Nebengruppe des Periodensystems, vor allem jedoch Tantalcarbid, eine analoge Wirkung auf die Eigenschaften von Hartlegierungen auf Nickelbasis zeigen wie das Chromcarbid $Cr_3C_2$.

Für die Herstellung einer erfindungsgemässen Hartlegierung wurden z.B. Legierungen der bekannten Art «Colmonoy Typ 6» mit ursprünglich 13,5% Chrom, 3% Bor, 4,25% Silizium, 0,75% Kohlenstoff, 4,75% Eisen, Rest Nickel im Vakuum-Induktionsofen erschmolzen und jeweils 5, 10 und 20 Gew.% der Carbide VC oder NbC bzw. TaC in die Schmelze eingebracht. Die nach dem Abguss erstarrte Schmelze wurde metallografisch auf Struktur sowie auf Härte und Zähigkeit untersucht.

Die Ergebnisse dieser Schmelzversuche sind in Tabelle 2 zusammengefasst. Als Vergleichssubstanz wurde die Ni-Basislegierung «Colmonoy Typ 6» herangezogen. Wie die Tabellenwerte zeigen, ist durch die erfindungsgemässe Zugabe der Hartstoffe VC, NbC oder TaC die Härte (HV 50 bzw. HRC) der neuen Legierung beträchtlich angestiegen, wohingegen die die Zähigkeit wiedergebende «Risslängensumme» in µm in den meisten Fällen beträchtlich und in anderen Fällen (Versuch 4) leicht gesenkt wurde. Der starke Anstieg der Risslängensumme mit steigendem Gehalt an VC in Versuch 3 lässt erkennen, dass mit 20% VC als Legierungszusatz das Optimum bereits weit überschritten ist.

Eine vorzügliche Wirkung im erfindungsgemässen Sinne hat nach den vorliegenden Messwerten das Tantalcarbid, das bereits mit einem Anteil von 5 Gew.% der Legierung nahezu die volle erreichbare Wirkung aufweist.

Der erfindungsgemässe Einsatz von Hartstoffen der genannten Art ist selbstverständlich nicht auf die genannten reinen Metallcarbide beschränkt, sondern es sind darüber hinaus auch die Mischkristalle aus binären und ternären Gemischen der genannten Carbide vorteilhaft wirksam. Ausser den genannten Carbiden und deren Gemischen verstehen sich auch die Carbonitride der genannten Elemente oder deren Mischkristallphasen in jeglicher Zusammensetzung als geeignet im Sinne der Erfindung.

Selbstverständlich ist die Anwendung der erfindungsgemässen Vorteile der neuen Legierungen nicht allein auf Gusswerkstücke beschränkt. Als weitere Anwendungsformen seien zu nennen:

Legierungspulver in reiner Form oder Kombination mit weiteren Hartstoffen für thermische Spritzzwecke oder Spritzschweisszwecke, Auftragsschweissen usw.

Weiterhin sind die Legierungen geeignet als Werkstoffe für Elektroden, Stäbe, Fülldrähte oder Gussteile (Vollguss) sowie zum Formgiessen und Formsintern.

Die Anwendungsmöglichkeiten als Verschleiss- oder Korrosionsschutzwerkstoff sind sehr vielfältig. Es wird auf «Stahl-Eisen-Bücher», Band 20, «Hartlegierungen zum Verschleissschutz», Düsseldorf 1975, hingewiesen.

Eine besonders vorteilhafte Anwendungsform der erfindungsgemässen Legierung betrifft das Auftragen derselben auf Grundwerkstoffe in der Verschleisstechnik, die im allgemeinen wegen ihres abweichenden thermischen Ausdehnungsverhaltens nicht mit extrem harten Verschleissschutzschichten gepanzert werden können. In solchen Fällen gewährleistet die erfindungsgemässe Legierung, dass die Auftragsschichten bei thermischer Beanspruchung der Verbundwerkstoffe trotz hoher Härte vorzüglich haften, was bei Hartlegierungen nach dem Stand der Technik nicht der Fall ist. Vorzugsweise wird die erfindungsgemässe Legierung in Pulver- oder Drahtform durch thermisches Auftragsspritzen (Flammspritzen oder Plasmaspritzen) auf die Unterlage aufgetragen und in der generell üblichen Art und Weise mechanisch nachgearbeitet, z.B. durch Schleifen und Polieren oder dergl.

Eine weitere bevorzugte Anwendungsform sind Stäbe, die durch Lichtbogen-Auftragsschweissen auf den Grundwerkstoff aufgebracht werden.

Anstelle von Drähten können die Hartlegierungspulver auch in Form von sogenannten Schnüren (mit Kunststoff- oder Metallfolien ummantelte Pulverstränge) zum thermischen Spritzen eingesetzt werden. Ausserdem ist der Einsatz der Legierung in Stabform als Hochtemperaturlot möglich.

Tabelle 1

Eigenschaften von Nickel-Basis-Legierungen

| Zusammensetzung | Colm. 4 (43)* | Colm. 5 (53)* | Colm. 6 (58)* | Colm. 8 (85)* | Erfindung |
|---|---|---|---|---|---|
| % Ni | Bal. | Bal. | Bal. | Bal. | Bal. |
| % Cr | 10 | 11,5 | 13,5 | 26,0 | 22–27 |
| % B | 2,0 | 2,5 | 3,0 | 3,5 | 2,5–2,7 |

Tabelle 1 (Fortsetzung)
Eigenschaften von Nickel-Basis-Legierungen

| Zusammensetzung | Colm. 4 (43)* | Colm. 5 (53)* | Colm. 6 (58)* | Colm. 8 (85)* | Erfindung |
|---|---|---|---|---|---|
| % Si | 2,25 | 3,75 | 4,25 | 4,0 | 3–4 |
| % C | 0,45 | 0,65 | 0,75 | 0,95 | 2,5–3,5 |
| % Fe | 2,5 | 4,25 | 4,75 | 1,0 | 4–4,5 |
| Härtevergleich (eigene Messungen) | | | | | |
| HRC | 30 | 44 | 53 | 55 | 60 |
| HV 50 | 80 | 535 | 625 | 690 | 880 |
| RLS+ | 0 | 23 | 255 | 344 | 50 |

+ Risslängensumme (eigene Messungen) in µm als Mass für die Zähigkeit.
* Nummer der Legierung in «Stahl-Eisen-Bücher», Band 20, Seiten 78, 79.

Tabelle 2
Eigenschaften von Hartlegierungen auf Nickelbasis, Typ C 6*, unter Zusatz verschiedener Mengen Carbide der 5. NG des Periodensystems

| Versuch Nr. | Legierung und Zusatz | Vickers-Härte HV 50 | Rockwell-Härte HRC | RLS+ (µm) |
|---|---|---|---|---|
| 0 | Typ C 6* ohne Zusatz | 625 | 53 | 255 |
| 1 | Typ C 6 + 5% VC | 696 | 55 | 81 |
| 2 | Typ C 6 + 10% VC | 779 | 56 | 162 |
| 3 | Typ C 6 + 20% VC | 889 | 60 | 371 |
| 4 | Typ C 6 + 5% NbC | 779 | 55 | 215 |
| 5 | Typ C 6 + 10% NbC | 816 | 58 | 122 |
| 6 | Typ C 6 + 20% NbC | 878 | 58 | 133 |
| 7 | Typ C 6 + 5% TaC | 770 | 56 | 70 |
| 8 | Typ C 6 + 10% TaC | 802 | 57 | 74 |
| 9 | Typ C 6 + 20% TaC | 797 | 58 | 71 |

* Grundlegierung mit 13,5% Chrom, 3% Bor, 4,25% Si, 0,75% Kohlenstoff, 4,75% Eisen, Rest Nickel.
+ Risslängensumme der Eindruckpyramide aus Härtemessung nach Vickers.

Bei der Zugabe der Carbide der genannten Elemente werden die anderen Anteile der bekannten Hartlegierung jeweils um den gleichen Prozentsatz entsprechend verringert, so dass bei einem Zusatz von beispielsweise 10 Gew.% Tantalcarbid die gesamten Anteile der bekannten Hartlegierung 90 Gew.% ausmachen.

**Patentansprüche**

1. Hartlegierung auf der Basis einer Legierung aus Nickel-Chrom-Bor-Silizium mit günstigen Eigenschaften bezüglich Härte und Zähigkeit, wobei die Legierung Chromcarbid enthält, dadurch gekennzeichnet, dass die Legierung
22 bis 27 Gew.% Chrom,
2,5 bis 2,7 Gew.% Bor,
3 bis 4 Gew.% Silizium,
4 bis 4,5 Gew.% Eisen,
2,5 bis 3,5 Gew.% Kohlenstoff
und Rest Nickel enthält.

2. Hartlegierung nach Anspruch 1, dadurch gekennzeichnet, dass Kohlenstoff in Form von $Cr_3C_2$ zugesetzt ist.

3. Hartlegierung auf der Basis einer Legierung aus Nickel-Chrom-Bor-Silizium mit günstigen Eigenschaften bezüglich Härte und Zähigkeit, wobei die Legierung Carbide der Elemente Vanadium, Niob und/oder Tantal enthält, dadurch gekennzeichnet, dass einer Legierung aus
10 bis 15 Gew.% Chrom,
2 bis 3 Gew.% Bor,
2 bis 5 Gew.% Silizium,
0,4 bis 0,8 Gew.% Kohlenstoff,
2 bis 5 Gew.% Eisen,
Rest Nickel-Carbide der Elemente Vanadium, Niob und/oder Tantal in Mengen von 5 bis 20 Gew.% bezogen, auf die Grundlegierung, zugesetzt sind.

4. Hartlegierung nach Anspruch 3, dadurch gekennzeichnet, dass die Carbide einzeln oder im Gemisch zweier oder dreier Carbide zugesetzt sind.

5. Hartlegierung nach Anspruch 3, dadurch gekennzeichnet, dass Carbonitride der genannten Elemente einzeln oder im Gemisch zugesetzt sind.

**Revendications**

1. Alliage dur à base d'un alliage constitué par du nickel-chrome-bore-silicium avec des propriétés avantageuses à l'égard de la dureté et de la ductilité, l'alliage contenant du carbure de chrome, caractérisé en ce que l'alliage contient
22 à 27% en poids de chrome,
2,5 à 2,7% en poids de bore,
3 à 4% en poids de silicium,
4 à 4,5% en poids de fer,
2,5 à 3,5% en poids de carbone
et le reste étant constitué par du nickel.

2. Alliage dur selon la revendication 1, caractérisé en ce que l'on ajoute du carbone sous forme de $Cr_3C_2$.

3. Alliage dur à base d'un alliage constitué par du nickel-chrome-silicium présentant des propriétés avantageuses à l'égard de la dureté et de la ductilité, l'alliage contenant des carbures, des éléments vanadium, de niobium et/ou tantale, caractérisé en ce que l'on ajoute à un alliage constitué par
10 à 15% en poids de chrome,
2 à 3% en poids de bore,
2 à 5% en poids de silicium
0,4 à 0,8% en poids de carbone,
2 à 5% en poids de fer,
le reste étant constitué par du nickel des carbures des éléments vanadium, de niobium et/ou tantale en des quantités de 5 à 20% en poids par rapport à l'alliage de base.

4. Alliage dur selon la revendication 3, caractérisé en ce que les carbures sont ajoutés individuellement ou en mélange de deux ou trois carbures.

5. Alliage dur selon la revendication 3, caractérisé en ce que des carbonitrures des éléments précités sont ajoutés individuellement ou en mélange.

**Claims**

1. Hard alloy on the basis of an alloy of nickel-chromium-boron-silicium having favourable hardness and tenacity characteristics, the alloy containing chromium carbide, characterized in that the alloy contains
22 to 27% b.w. chromium,
2.5 to 2.7% b.w. boron,
3 to 4% b.w. silicium,
4 to 4.5% b.w. iron,
2.5 to 3.5% b.w. carbon and rest nickel.

2. Hard alloy according to claim 1, characterized in that carbon in form of $Cr_3c_2$ is added.

3. Hard alloy on the basis of an alloy of nickel-chromium-boron-silicium having favourable hardness and tenacity characteristics, the alloy containing carbides of the elements vanadium, niobium and/or tantalum, characterized in that an alloy consisting of
10 to 15% b.w. chromium,
2 to 3% b.w. boron,
2 to 5% b.w. silicium,
0.4 to 0.8% b.w. carbon,
2 to 5% b.w. iron,
rest nickel
is supplemented by carbides of the elements vanadium, niobium and/or tantalum in amounts of 5 to 20% b.w. related to the base alloy.

4. Hard alloy according to claim 3, characterized in that the carbides are added singly or as a mixture of two or three carbides.

5. Hard alloy according to claim 3, characterized in that carbon nitrides of the aforesaid elements are added singly or as a mixture.